# EUROPÄISCHE PATENTANMELDUNG

(11) **EP 0 955 202 A2**
(43) Veröffentlichungstag der Anmeldung: **10.11.1999**
(21) Anmeldenummer: 99104559.2
(22) Anmeldetag: 08.03.1999
(51) Int. Cl.: B60L 5/19

(54) **Verfahren zur Einstellung der Neigung eines Stromabnehmers und Vorrichtung zur Durchführung des Verfahrens**

(30) Priorität: 05.05.1998 DE 19819959
(71) Anmelder: FIAT-SIG Schienenfahrzeuge AG, 8212 Neuhausen (CH)
(72) Erfinder: Berger, Thomas, 78224 Singen (DE); Brutti Erich, 8212 Neuhausen (CH); Kwasnicki, Elias, 8212 Neuhausen (CH)
(74) Vertreter: Troesch Scheidegger Werner AG

(57) **Zusammenfassung**

Die Erfindung betrifft ein Verfahren und eine Vorrichtung zur Einstellung der Neigung eines Stromabnehmers auf einem Schienenfahrzeug, dessen Wagenkasten aufgrund von auf diesen wirkenden Querbeschleunigung oder dgl. geneigt wird. Das Verfahren besteht dabei darin, dass die Neigung des Stromabnehmers in Abhängigkeit des Wagenkastens mit Hilfe einer auf ein Stellglied (SG) wirkenden Steuereinheit (ST) derart eingestellt wird, dass der Stromabnehmer mittig in bezug auf eine Fahrleitung zu liegen kommt, und dass bei Ausfall einer Systemkomponente zur Einstellung der Neigung des Stromabnehmers und/oder des Wagenkastens, der Neigungswinkel des Stromabnehmers mit Hilfe einer Zentriervorrichtung (ZV) in eine vorgegebene Position, vorzugsweise in Mittenstellung, gebracht wird.

## Beschreibung

Die vorliegende Erfindung betrifft ein Verfahren zur Einstellung der Neigung eines Stromabnehmers sowie eine Vorrichtung zur Durchführung des Verfahrens.

Für Schienenfahrzeuge mit aktiver Neigetechnik - d.h., wenn ein Wagenkasten in Abhängigkeit der Querbeschleunigung, der Gleisüberhöhung oder dgl. geneigt wird, um bei gleichem Komfort für die Passagiere die Kurvengeschwindigkeit zu erhöhen - ist eine starre Kopplung zwischen Wagenkasten und Stromabnehmer ungeeignet, da durch das Neigen des Wagenkastens entgegen einer auf diesen wirkende Querbeschleunigung der auf diesem befestigte Stromabnehmer ebenfalls in die gleiche Richtung geneigt wird, was zu einem Fahrleitungsverlust führt.

Es wurde bereits mehrfach vorgeschlagen, den Stromabnehmer in Abhängigkeit der Neigung des Wagenkastens entsprechend eine Gegenbewegung ausführen zu lassen, damit die Fahrleitung möglichst mittig in bezug auf den Stromabnehmer positioniert ist.

In diesem Zusammenhang sei zunächst auf die Lehre gemäss der Europäischen Patentanmeldung EP-0 436 993 verwiesen, in der ein Stromabnehmer beschrieben wird, der mittels pneumatischen Steuereinheiten in Abhängigkeit der Neigung des Wagenkastens derart entgegengesetzt geneigt wird, dass der Kontakt zwischen Stromabnehmer und Fahrleitung gewährleistet ist.

Des weiteren ist in EP-0 485 273 ein Stromabnehmer beschrieben, der in bezug auf das Fahrgestell eines Schienenfahrzeuges unbeweglich ist, auch wenn der entsprechende Wagenkasten geneigt wird. Dabei kommt ein Seilzug zum Einsatz, mit Hilfe dessen der Stromabnehmer unter der Fahrleitung gehalten wird.

Die bekannten Lehren weisen den Nachteil auf, dass bei einem Ausfall einer oder mehrerer Systemkomponenten die Energieversorgung unterbrochen wird.

Der vorliegenden Erfindung liegt daher die Aufgabe zugrunde, ein Verfahren anzugeben, bei dem ein Verlust des Fahrleitungskontaktes vermieden bzw. bei dem zumindest das Risiko eines Verlustes des Fahrleitungskontaktes vermindert wird.

Diese Aufgabe wird durch die im Patentanspruch 1 angegebenen Massnahmen gelöst. Vorteilhafte Ausgestaltungen der Erfindung sowie eine Vorrichtung zur Durchführung des Verfahrens sind in weiteren Ansprüchen angegeben.

Die Erfindung weist folgende Vorteile auf: Indem bei Ausfall einer Systemkomponente, beispielsweise der Steuereinheit zur Einstellung der Wagenkastenneigung, der Stromabnehmer unverzüglich eine vorgegebene Position, vorzugsweise die Mittenposition, einnimmt, kann vermieden werden, dass ein Verlust des Fahrleitungskontaktes erfolgt, was zu einer erhöhten Systemstabilität führt.

Die Erfindung wird nachfolgend anhand von Zeichnungen beispielsweise näher erläutert. Dabei zeigen
- Fig. 1: ein auf einem Schlitten montierter Stromabnehmer in Frontal- und Seitenansicht,
- Fig. 2: eine perspektivische Darstellung einer erfindungsgemässen Vorrichtung mit Grundrahmen und Schlitten,
- Fig. 3: eine weitere Ausführungsform der erfindungsgemässen Vorrichtung,
- Fig. 4A bis 4C: verschiedene Ausführungsvarianten für eine Zentriervorrichtung in schematischer Darstellung und
- Fig. 5A bis 5C: eine Detailansicht einzelner Bestandteile einer weiteren Ausführungsform für eine Zentriervorrichtung.

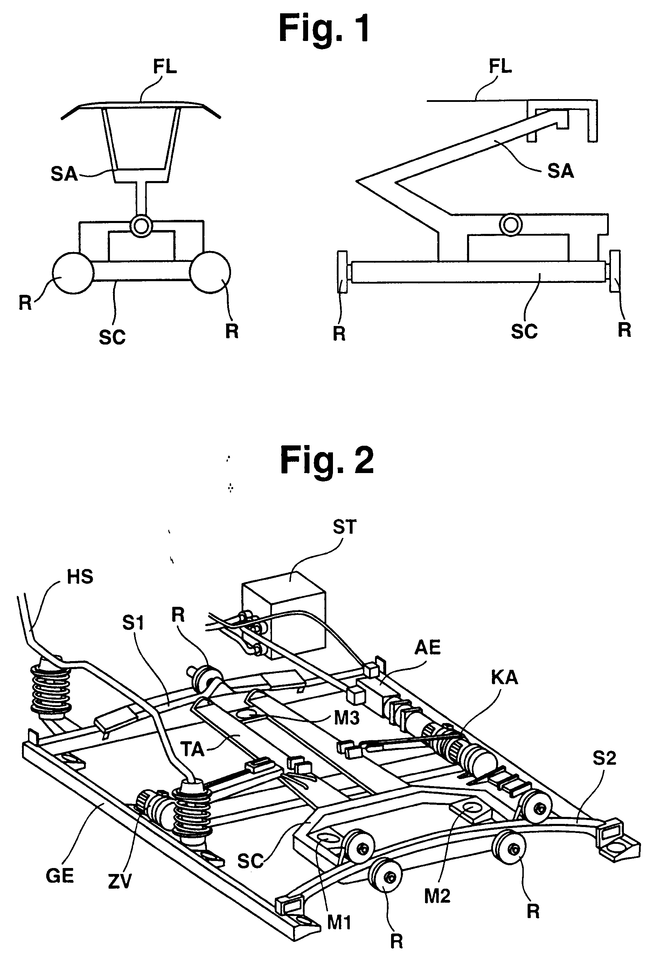

Fig. 1 zeigt in schematischer Darstellung einen auf einem Schlitten SC montierten Stromabnehmer SA, der im ausgefahrenen Zustand mit einer Fahrleitung FL in Berührung steht. Der Schlitten SC weist ein Grundelement, welches auf dem Dach eines Schienenfahrzeuges angeordnet ist, und Rollen R (beide in Fig. 1 nicht dargestellt) auf, die eine Bewegung senkrecht zur Fahrrichtung des Schienenfahrzeuges ermöglichen.

Fig. 2 zeigt in perspektivischer Darstellung ein Grundelement GE, das auf dem Dach eines Schienenfahrzeuges montierbar ist und als Träger eines Schlittens SC verwendet wird. Sämtliche Systemkomponenten sind mit dem Grundelement GE direkt oder indirekt über weitere Systemkomponenten verbunden, was eine einfache Montage bzw. Demontage der erfindungsgemässen Vorrichtung zulässt.

Mit dem Grundelement GE sind eine Antriebseinheit AE, ein Hochspannungsteil HS, eine Zentriervorrichtung ZV und eine Führungsvorrichtung bestehend aus zwei Schienen S1 und S2 verbunden. Die Schienen S1 und S2 sind kreisförmig bzw. kreissegmentförmig ausgebildet, wobei ihre Mittelpunkte mit dem Drehpunkt des Wagenkastens zusammenfallen. Damit kann der auf dem Schlitten SC in Montagepunkten M1 bis M3 montierbare Stromabnehmer SA (Fig. 1) eine zur Neigung des Wagenkastens entgegengesetzte Bewegung ausführen, womit der Stromabnehmer SA mittig in bezug auf die Fahrleitung FL (Fig. 1) gehalten werden kann.

Auf den die Führungsvorrichtung bildenden Schienen S1 und S2 laufen mit dem Schlitten SC verbundene Rollen R, wobei eine Dreipunktabstützung vorgesehen ist, indem eine Rolle R auf der einen Schiene S1 und zwei Rollen R auf der anderen Schiene S2 aufliegen. Zur Vermeidung eines Abhebens des Schlittens SC vom Grundelement GE sind auf der Unterseite der Schienen S1 und S2 Gegenrollen vorgesehen, die ebenfalls am Schlitten SC befestigt sind.

Zum seitlichen Verschieben des Schlittens SC in bezug auf das Grundelement GE ist eine Antriebseinheit AE vorgesehen, die auf ein mit dem Schlitten SC verbundenes Antriebselement AM wirkt. Dabei bildet das Antriebselement AM eine Schlaufe, die über zwei Umlenkrollen RR geführt ist, wovon eine durch die Antriebseinheit AE angetrieben wird und deren Enden mit dem Schlitten SC verbunden sind.

Ferner ist eine Steuereinheit ST vorgesehen, welche die Antriebseinheit AE aufgrund der Neigung des Wagenkastens ansteuert bzw. bei Fehleraufkommen die Antriebseinheit AE in Leergang schaltet, womit die Steuerung einer Zentriervorrichtung ZV übergeben wird, die den Schlitten SC in eine vorgegebene Position überführt. In einer vorzugsweisen Ausführungsform wird der Schlitten SC durch die Zentriervorrichtung ZV mittig in bezug auf die Fahrleitung FL (Fig. 1) ausgerichtet.

Wie aus Fig. 1 ersichtlich ist, wird die vom Stromabnehmer SA abgegriffene Spannung im Bereich des Grundelementes GE über einen Hochspannungsteil HS geführt. Dabei erfolgt die Stromübertragung vom Gleitbügel auf den Hochspannungsteil HS in einer bevorzugten Ausführungsform über einen, die Relativbewegungen zwischen dem sich neigenden Wagenkasten und dem sich entgegengesetzt sich neigenden Schlitten SC ausgleichenden Teleskoparm TA, der am Stromabnehmer SA befestigt ist.

Für eine bessere Übersichtlichkeit wurde in Fig. 2 der Stromabnehmer SA nicht dargestellt. Entsprechend sind die Montagepunkte M1 bis M3 nicht belegt.

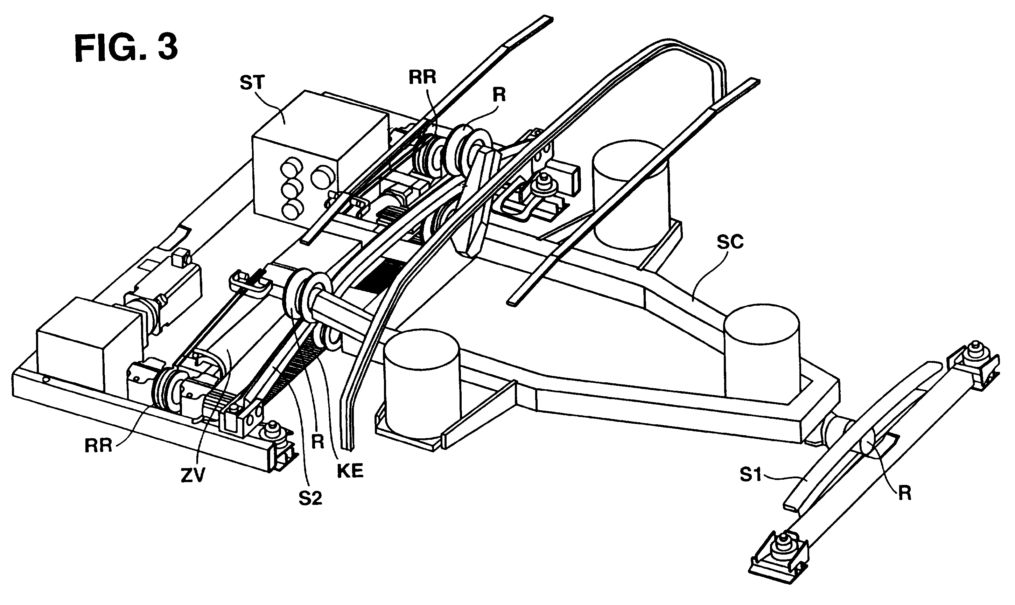

Fig. 3 zeigt eine weitere Ausführungsform der erfindungsgemässen Vorrichtung, wobei der Stromabnehmer SA stark reduziert dargestellt ist.

Gegenüber der in Fig. 2 dargestellten Ausführungsform befindet sich bei der in Fig. 3 dargestellten Ausführungsform die Steuereinheit ST in Fahrtrichtung gesehen hinter der zweiten Schiene S2 und somit hinter dem dreieckförmigen Schlitten SC. Entsprechend sind auch das von der Antriebseinheit AE angetriebene Antriebselement AM und die Zentriervorrichtung ZV unmittelbar hinter der zweiten Schiene S2 angeordnet. Diese Anordnung weist die Vorteile auf, dass eine kompakte Bauweise der erfindungsgemässen Vorrichtung erhalten wird und dass Wartungsarbeiten, bei denen auch einzelne Komponenten ausgewechselt werden müssen, in kurzer Zeit ausgeführt werden können. Im Sinne der Erfindung ist auch eine Lösung denkbar, bei der die Zentriervorrichtung ZV und das Antriebselement AM auf beiden Seiten der Schiene S2 angeordnet ist.

Wie bereits ausgeführt wurde, weist die erfindungsgemässe Vorrichtung eine Zentriervorrichtung ZV auf, die eine rasche Rückstellung des Stromabnehmers SA in eine vorgegebene Position in bezug auf die Fahrleitung FL (Fig. 1), vorzugsweise in Mittenposition, ermöglicht. Darüber hinaus hält die Zentriervorrichtung ZV den Stromabnehmer SA in der vorgegebenen Position.

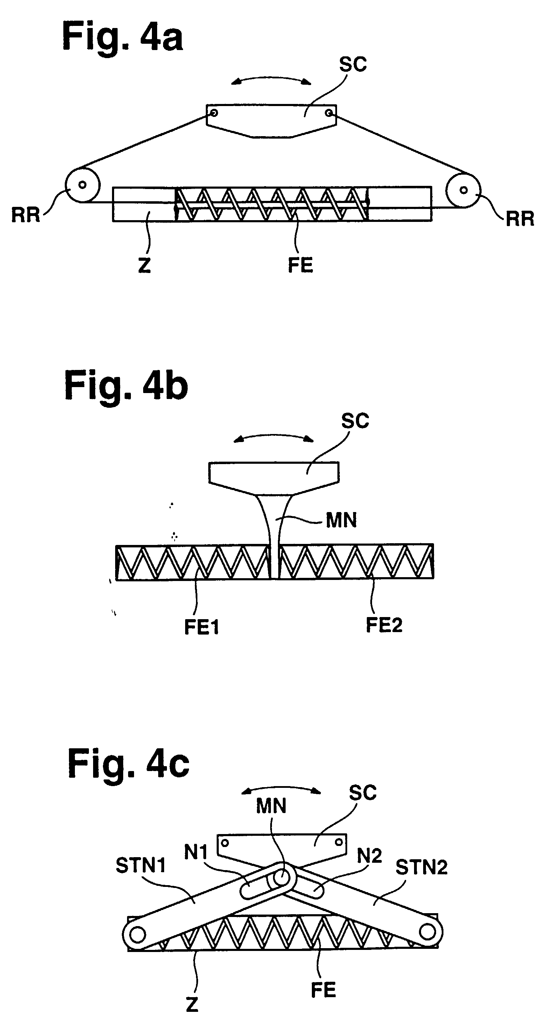

Im folgenden werden verschiedene Zentriervorrichtungen ZV anhand von in Fig. 4A bis 4C schematisch dargestellten Ausführungsvarianten erläutert:

In Fig. 4A ist eine Zentriervorrichtung ZV mit einem in einem Zylinder Z enthaltenen Federelement FE als vorgespannte Druckfeder dargestellt. Der Schlitten SC, der sich entsprechend den Ausführungen zu den Fig. 2 und 3 auf Schienen S1 und S2 bewegt, ist mit zwei Stahlbändern bzw. zwei Ketten als Antriebselemente AM, die je über eine Umlenkrolle RR geführt sind, je mit einem Ende der Druckfeder verbunden. Damit wird auf den Schlitten SC eine zentrierende Kraft ausgeübt, sobald eine Auslenkung des Schlittens SC aus der Mittenlage erfolgt.

Alternativ kann das Antriebselement AM auch als umlaufendes Band ausgeführt sein, bei dem ein daran angeordneter Mitnehmer einerseits die Vorspannung eines Federelementes ermöglicht und anderseits einen Leerhub zulässt.

Anstelle der Realisierung der Antriebselemente AM mittels Stahlbändern bzw. Ketten ist darüber hinaus eine entsprechende Realisierung mit Seilen, Zahnriehmen, Zahnstangen oder dgl. denkbar.

Eine weitere Ausführungsform ist in Fig. 4B dargestellt, wobei bei dieser der Schlitten SC einen Mitnehmer MN aufweist, der zwischen zwei vorgespannte Federelemente FE1 und FE2 eingreift und der mit diesen verbunden ist. Bei Auslenkung des Schlittens SC erfährt dieser wiederum eine Rückstellkraft in Richtung der Position, in der die beiden Federelemente FE1 und FE2 im Gleichgewicht sind. Anstelle einer mittigen Ausrichtung des Schlittens SC kann auch eine andere Position gewählt werden, sofern die beiden Federelemente FE1 und FE2 unterschiedlich vorgespannt werden.

Schliesslich ist in Fig. 4C eine weitere Ausführungsform für eine Zentriervorrichtung dargestellt, wobei bei dieser zwei Stangen STN1 und STN2 mit Nuten N1 und N2, ein Federelement FE als vorgespannte Druckfeder und ein in die Nuten N1 und N2 eingreifender Mitnehmer MN vorgesehen sind. Das Federelement FE ist in einem Zylinder Z enthalten und ist an dessen Enden mit den Stangen STN1 und STN2 verbunden. Wird der Schlitten SC beispielsweise nach rechts ausgelenkt, so wird das Federelement FE durch die Stange STN1 weiter vorgespannt, wobei sich der Mitnehmer MN in der Nut N2 der Stange STN2 bewegt. Der Schlitten SC erfährt wiederum eine Rückstellkraft aufgrund des vorgespannten Federelementes FE.

Weitere nicht dargestellte Ausführungsformen für die Zentriervorrichtung wurden in Anwendung der vorstehenden Erläuterungen entwickelt. So beinhalten entsprechende Ausführungsformen beispielsweise Teleskopstangen, Kurvengetriebe mit Tellerfedern, die Verwendung von zwei Zugfedern, elektrische Antriebe mit entsprechenden Steuerungen, pneumatische oder hydraulische Steuerungen.

Während Ausführungsformen mit elektrischer, hydraulischer, pneumatischer oder manueller Steuerung (z.B. eine Ausführungsform mit Handkurbel) als aktiv bezeichnet werden, werden die Ausführungsformen mit Federelementen, Teleskopstangen und dgl. als passiv bezeichnet.

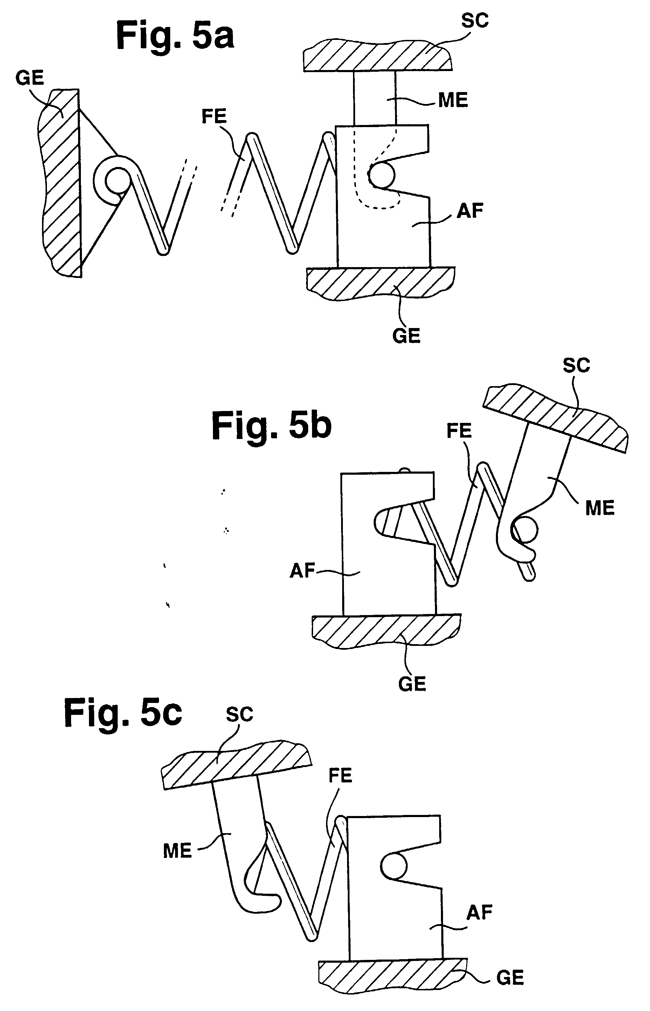

Anhand der Fig. 5A bis 5C wird eine weitere Ausführungsform der Zentriervorrichtung erläutert, wobei die Arbeitsweise anhand von einzelnen, in den Fig. 5A bis 5C dargestellten Bestandteilen beschrieben wird. Wiederum kommen vorgespannte Federelemente FE zum Einsatz, die innerhalb des Grundelementes GE vorgespannt sind, wobei bei zentriertem Schlitten SC ein Ende der Zugfeder FE in einem mit dem Grundelement GE verbundenen Aufnahmeelement AF liegt. In Fig. 5A sind Teile einer Zugfeder FE - und somit lediglich die Hälfte der Zentriervorrichtung - dargestellt. Zur mittigen Ausrichtung des Schlittens SC ist eine auf die Gegenseite wirkende Zugfeder (nicht dargestellt) ebenfalls notwendig.

In Fig. 5B ist der Schlitten SC bei Auslenkung nach rechts dargestellt. Ein mit dem Schlitten SC verbundener Mitnehmer ME spannt die Zugfeder FE weiter, indem das bei mittiger Ausrichtung des Schlittens SC im Aufnehmer AF liegende Ende des Federelementes FE durch den Mitnehmer ME nach rechts verschoben wird, womit das Federelement FE weiter gespannt wird.

Entsprechend wird - bei Auslenkung nach links wie in Fig. 5C dargestellt - das Ende des Federelementes FE im Aufnehmer AF deponiert, womit das Federelement FE keine Kraft mehr auf den Mitnehmer ME und somit auf den Schlitten SC ausübt.

Wie erwähnt, ist ein zweites entsprechendes Federelement angeordnet, dessen Kraft derjenigen des in den Fig. 5A bis 5C dargestellten Federelementes FE entgegenwirkt. Damit ist ein mittiges Ausrichten des Schlittens SC möglich, wobei darüber hinaus ein Leerhub - je nach Anordnung der beiden Aufnehmer - möglich ist.

## Patentansprüche

1. Verfahren zur Einstellung der Neigung eines Stromabnehmers (SA) auf einem Schienenfahrzeug, dessen Wagenkasten aufgrund von auf diesen wirkenden Querbeschleunigung oder dgl. geneigt wird, wobei das Verfahren darin besteht,
- dass die Neigung des Stromabnehmers (SA) in Abhängigkeit der Neigung des Wagenkastens mit Hilfe einer auf ein Stellglied (SG) wirkenden Steuereinheit (ST) derart eingestellt wird, dass der Stromabnehmer (SA) mittig in bezug auf eine Fahrleitung (FL) zu liegen kommt, und
- dass, bei Ausfall einer Systemkomponente zur Einstellung der Neigung des Stromabnehmers (SA) und/oder des Wagenkastens, der Neigungswinkel des Stromabnehmers (SA) mit Hilfe einer Zentriervorrichtung (ZV) in eine vorgegebene Position, vorzugsweise in Mittenstellung, gebracht und gehalten wird.

2. Verfahren nach Anspruch 1, dadurch gekennzeichnet, dass die Zentrierung passiv oder aktiv erfolgt.

3. Vorrichtung zur Durchführung des Verfahrens nach Anspruch 1 oder 2, dadurch gekennzeichnet, dass eine Sensoreinheit zur Ermittlung der Wagenkastenneigung, ein Stellglied (SG), eine Antriebseinheit (AE), ein Schlitten (SC) mit einem auf diesem montierten Stromabnehmer (SA), eine Recheneinheit, mindestens eine Führungsvorrichtung (S1, S2) und eine Zentriervorrichtung (ZV) vorgesehen sind, dass die Sensoreinheit mit der Recheneinheit und diese mit dem Stellglied (SG) verbunden ist, dass das Stellglied (SG) auf die Antriebseinheit (AE) wirkt und damit die durch die Führungsvorrichtung (S1, S2) geführten Schlitten (SC) derart bewegt, dass eine Fahrleitung (FL) vorzugsweise mittig auf dem Stromabnehmer (SA) liegt.

4. Vorrichtung nach Anspruch 3, dadurch gekennzeichnet, dass die Führungsvorrichtung (S1, S2) aus zwei kreissegmentförmigen Schienen (S1, S2) besteht, wobei das Zentrum der Kreissegmente im Drehpunkt des Wagenkastens liegt.

5. Vorrichtung nach Anspruch 4, dadurch gekennzeichnet, dass der Schlitten (SC) insgesamt drei Auflagepunkte auf den Schienen (S1, S2) aufweist.

6. Vorrichtung nach einem der vorangehenden Ansprüche, dadurch gekennzeichnet, dass ein Teleskoparm (TA) vorgesehen ist, über den elektrische Energie vom Stromabnehmer (SA) zum Schienenfahrzeug geführt wird.

7. Vorrichtung nach einem der vorangehenden Ansprüche, dadurch gekennzeichnet, dass die Zentriervorrichtung (ZV) mindestens ein Rückführelement (FE) aufweist, das den Stromabnehmer (SA), bei Ausfall einer Systemkomponente zur Einstellung der Neigung des Stromabnehmers (SA) und/oder des Wagenkastens, vorzugsweise mittig in bezug auf die Fahrleitung (FL) ausrichtet.

8. Vorrichtung nach Anspruch 7, dadurch gekennzeichnet, dass die Rückführelemente Federelemente (FE) sind.

9. Vorrichtung nach Anspruch 8, dadurch gekennzeichnet, dass der Schlitten (SC) ein Mitnehmer (MN) aufweist, der zwischen zwei Federelemente (FE, FE1, FE2) eingreift.

10. Vorrichtung nach Anspruch 8, dadurch gekennzeichnet, dass der Schlitten (SC) einen Mitnehmer (MN) aufweist, der in an den einen Enden von zwei Stangen (STN1, STN2) vorgesehenen Nuten (N1, N2) eingreift, wobei die anderen Enden der Stangen (STN1, STN2) je mit einem Ende eines vorgespannten Federelementes (FE) verbunden sind.

11. Vorrichtung nach Anspruch 8, dadurch gekennzeichnet, dass die Federelemente (FE) vorgespannt sind, dass mindestens ein Mitnehmer (ME) und mindestens ein Aufnehmer (AF) vorgesehen sind, wobei mindestens ein Ende eines Federelementes (FE) durch den Mitnehmer (ME) aus dem Aufnehmer (AF) geführt wird unter gleichzeitiger Vergrösserung der Federspannung.

12. Vorrichtung nach einem der Ansprüche 3 bis 11, dadurch gekennzeichnet, dass das Stellglied (SG), die Antriebseinheit (AE), mindestens eine Führungsvorrichtung (S1, S2) und die Zentriervorrichtung (ZV) auf einem mit dem Schienenfahrzeug verbindbaren Grundelement (GE) montiert sind.
